Europäisches Patentamt

European Patent Office

Office européen des brevets

(19)

(11) Veröffentlichungsnummer : **0 114 040**
**B1**

# EUROPÄISCHE PATENTSCHRIFT

(12)

(45) Veröffentlichungstag der Patentschrift :
30.07.86

(21) Anmeldenummer : 83890227.8

(22) Anmeldetag : 19.12.83

(51) Int. Cl.⁴ : **C 21 B 13/00, C 21 B 13/14**

(54) **Verfahren und Einschmelzvergaser zur Erzeugung von flüssigem Roheisen oder von Stahlvorprodukten.**

(30) Priorität : 21.12.82 AT 4618/82

(43) Veröffentlichungstag der Anmeldung :
25.07.84 Patentblatt 84/30

(45) Bekanntmachung des Hinweises auf die Patenterteilung : 30.07.86 Patentblatt 86/31

(84) Benannte Vertragsstaaten :
BE DE FR GB IT LU NL SE

(56) Entgegenhaltungen :
EP-A- 0 063 924
EP-B- 0 010 627
DE-A- 3 034 520
DE-A- 3 216 019
DE-C- 1 017 314
DE-C- 1 086 256
DE-C- 3 034 520

(73) Patentinhaber : VOEST-ALPINE Aktiengesellschaft
Muldenstrasse 5
A-4020 Linz (AT)

Korf Engineering GmbH
Neusser Strasse 111
D-4000 Düsseldorf 1 (DE)

(72) Erfinder : Die Erfinder haben auf ihre Nennung
verzichtet

(74) Vertreter : Wolfram, Gustav, Dipl.-Ing.
Schwindgasse 7 P.O. Box 205
A-1041 Wien (AT)

**Beschreibung**

Die Erfindung betrifft ein Verfahren zur Erzeugung von flüssigem Roheisen oder von Stahlvorprodukten und Reduktionsgas in einem Einschmelzvergaser, in dem durch Zugabe von Kohle und durch Einblasen von sauerstoffhältigem Gas eine erste Fließbettzone aus Kokspartikeln mit starker Bewegung der Partikel oberhalb der Einblasebene (erste Einblasebe) gebildet wird und Eisenschwammpartikel und/oder vorreduzierte Eisenerzpartikel mit einem wesentlichen Anteil einer Partikelgröße oberhalb 3 mm der ersten Fließbettzone von oben zugegeben werden.

Ein Verfahren dieser Art ist durch die EP-B1-0 010 627 bekannt geworden. Danach wird in einem Einschmelzvergaser ein Kohlefließbett mit einer Hochtemperaturzone im unteren Bereich erzeugt, dem die Eisenschwammpartikel von oben zugegeben werden. Durch die Staudruck- und Auftriebskraft im Kohlefließbett werden auch Eisenschwammpartikel mit einer Größe oberhalb 3 mm merklich abgebremst und im Wärmetausch mit dem Fließbett um einen wesentlichen Betrag in ihrer Temperatur erhöht. Sie treffen mit erniedrigter Geschwindigkeit auf die sich unmittelbar unter der Hochtemperaturzone bildende Schlackenschicht und werden auf oder in dieser aufgeschmolzen. Die maximale Schmelzleistung des Einschmelzvergasers und damit die Menge und Temperatur des erzeugten flüssigen Roheisens hängt nicht nur von den geometrischen Abmessungen des Einschmelzvergasers ab, sondern wird weitgehend durch die Güte der verwendeten Kohle und den Anteil größerer Partikel im zugegebenen Eisenschwamm bestimmt. Bei Verwendung minderwertiger Kohle verringert sich entsprechend die mögliche Wärmezufuhr in das Schlackenbad und damit die Aufschmelzleistung für die Eisenschwammpartikel. Insbesondere bei einem größeren Anteil an Eisenschwammpartikeln einer Korngröße oberhalb 3 mm, die beim abgebremsten Fall durch das Kohlefließbett nicht in gleichem Maße erwärmt werden können wie kleinere Partikel und die deshalb eine höhere Schmelzleistung im Bereich der Schlackenschicht erforderlich machen, wirkt sich die herabgesetzte Schmelzleistung beim Einsatz minderwertiger Kohle nachteilig aus.

Durch die DE-C2-1 017 314 ist ein Verfahren zur Erzeugung von Brenngasen aus staubförmigen bis grobkörnigen Brennstoffen bekannt geworden, bei dem in einem Gaserzeuger zwei Fließbettzonen aus Kokspartikeln gebildet werden, von denen die obere Zone, der ein endotherm reagierendes Vergasungsmittel zugeführt wird, in stark wirbelnder Bewegung und die untere, der ein exotherm reagierendes Vergasungsmittel zugeführt wird, in unmerklicher bis schwacher Bewegung der Kokspartikel gehalten wird. Auf diese Weise ist es möglich, an der Stelle der exotherm zugeführten Vergasungsmittel den Wärmeabtransport durch den wirbelnden Brennstoff wesentlich zu verringern und die aus den oberen Brennstoffschichten absinkenden Vergasungsrückstände als geschmolzene Schlacke flüssig abzuziehen. In der « heißen Zone » des Gaserzeugers lassen sich Temperaturen von 1 500 °C und mehr erzielen. Es wird in der Druckschrift auch als möglich hingestellt, mit den Brennstoffen Erze in den Gaserzeuger einzuführen und das geschmolzene Metall, das sich am Boden des Gaserzeugers unterhalb der geschmolzenen Schlacke ansammelt, für sich flüssig abzustechen. In der Praxis ist der Einsatz von Erzen bei einem derartigen Verfahren zur Erzeugung von Brenngasen nicht bekannt geworden. Es ist allenfalls denkbar, auf diese Weise Feinerze in geringer Menge zu reduzieren und aufzuschmelzen.

Durch die DE-B1-1 086 256 ist ein Verfahren zur Eisengewinnung aus staubförmigen bzw. feinkörnigen Eisenerzen bekannt geworden, bei dem in einem Schmelzgefäß durch Zugabe von Koks ein Koksfestbett gebildet wird, in dessen unteren Bereich unmittelbar oberhalb des Schlakkenbadspiegels ein Verbrennungsmedium, wie sauerstoffangereicherte Luft, eingeleitet wird. Oberhalb des Koksfestbettes wird in die Schmelzkammer Staubkohle, vorreduziertes Erz und sauerstoffangereicherte Luft eingeleitet und hierbei flüssiges Eisen und flüssige Schlacke gebildet, die zum größten Teil in Tropfenform nach unten fallen und hierbei auf das Koksfestbett treffen. In diesem wird die Schlacke vollständig ausreduziert, das Eisen desoxidiert und aufgekohlt, entschwefelt und gegebenenfalls mit bestimmten Legierungsbestandteilen angereichert. Die oberhalb des Koksfestbettes entstehenden Brenngase strömen nach oben und reißen den durch obere Eintrittsöffnungen in der Schmelzkammer eingeführten kalten Erzstaub mit, um diesen in einer gesonderten Vorreduktionskammer vorzureduzieren, von wo aus er dann zum Einblasen in die Schmelzkammer entnommen wird. Auch dieses Verfahren eignet sich nur für die Eisengewinnung aus staubförmigen bzw. feinkörnigen Eisenerzen, nicht jedoch für den Einsatz von Eisenschwammpartikeln mit einem wesentlichen Anteil einer Partikelgröße oberhalb 3 mm.

Der Erfindung liegt die Aufgabe zugrunde, bei einem Verfahren der einleitend genannten Art die Schmelzleistung zu erhöhen. Es soll bei Einsatz eines größeren Anteiles von eisenhaltigem Material einer Partikelgröße oberhalb 3 mm und/oder bei Einsatz von Kohle geringerer Qualität die Abstichleistung an flüssigem Roheisen oder an Stahlvorprodukten gesteigert werden. Es soll ermöglicht werden, die Temperatur der Metallschmelze so weit zu erhöhen, daß mit dem gewonnenen flüssigen Roheisen oder Stahlvormaterial metallurgische Reaktionen erleichtert werden. Es soll auch der Ablauf gewünschter metallurgischer Reaktionen innerhalb des Einschmelzvergasers erleichtert werden. Schließlich soll eine Reduzierung der Höhe des Einschmelzvergasers ermöglicht werden.

Das erfindungsgemäße Verfahren ist dadurch gekennzeichnet, daß unterhalb der ersten Einblasebene und oberhalb des Schlackenbadspiegels eine zweite Einblasebene für sauerstoffhaltiges Gas liegt und hier die Gaszufuhr so geregelt wird, daß sich zwischen den beiden Einblasebenen eine zweite Zone eines Fließbettes aus Kokspartikeln mit schwacher oder unmerklicher Bewegung der Partikel oder eines durchgasten Feststoffbettes aus Kokspartikeln ausbildet und die Temperatur in der zweiten Zone oberhalb der Schmelztemperatur des eisenhaltigen Materials gehalten wird.

Eine bevorzugte Ausführungsform des erfindungsgemäßen Verfahrens besteht darin, daß unterhalb der ersten Fließbettzone eine Festbettzone aus Kokspartikeln vorgesehen wird, welche sich aus dem Fließbett absetzen, in die gleichfalls sauerstoffhaltiges Gas und gegebenenfalls Kohlenstoffträger und/oder Zuschlagstoffe eingeleitet werden.

Bei dem erfindungsgemäßen Verfahren wird, ausgehend von dem in der EP-A1-0 010 627 beschriebenen Verfahren, unterhalb der ersten Fließbettzone aus Kokspartikeln mit starker Bewegung der Partikel eine weitere Zone aus Kokspartikeln mit schwacher oder unmerklicher Bewegung der Partikel oder aus einem durchgasten Festbett aus Kokspartikeln gebildet. Dies geschieht dadurch, daß unterhalb einer ersten Einblasebene für die erste Fließbettzone eine weitere, zweite Einblasebene für die zweite Zone vorgesehen wird und die Gaszufuhr in der zweiten Einblasebene so geregelt wird, daß sich die Kokspartikel in der zweiten Zone nur schwach oder praktisch nicht mehr bewegen. In jedem Fall muß diese zweite Zone jedoch durchgasbar sein, um die in der zweiten Einblasebene erzeugten Brenngase nach oben abführen zu können. Zweckmäßig ist die zweite Zone aus verhältnismäßig großen Kokspartikeln aufgebaut. Vorteilhaft wird die zweite Zone im wesentlichen aus Kokspartikeln einer Korngröße von 2 mm bis 70 mm, insbesondere einer Korngröße von 10 mm bis 30 mm gebildet. Zu diesem Zweck wird grobstückige Kohle von oben in den Einschmelzvergaser zugegeben, die bei Durchgang durch die erste Fließbettzone nicht vollständig vergast und sich in Form größerer Kokspartikel in der zweiten Zone sammelt. Alternativ oder zusätzlich können als Kohlenstoffträger für den Aufbau der zweiten Zone auch Koks- oder Hochtemperatur-Braunkohlestückkoks (BHT-Stückkoks) eingesetzt werden. Bei dem erfindungsgemäßen Verfahren werden sowohl in der ersten als auch in der zweiten Einblasebene sauerstoffhaltige Gase, wie Luft, technisch reiner Sauerstoff oder deren Gemische, zugeführt, die in diesen Ebenen durch eine exotherme Reaktion für eine hohe Wärmezufuhr sorgen. Die zweite Zone aus ruhenden Kokspartikeln oder Kokspartikeln schwacher Bewegung befindet sich somit zwischen zwei Hochtemperaturzonen, nämlich den beiden Einblasebenen für sauerstoffhaltiges Gas, und läßt sich, da sie von den heißen Brenngasen der unteren, zweiten Einblasebene durchströmt wird, selbst bei schlechter Kohlequalität auf eine hohe Temperatur, jedenfalls auf eine Temperatur oberhalb der Schmelztemperatur des eisenhaltigen Materials, aufheizen. Vorzugsweise wird die Temperatur in der zweiten Zone auf 100 bis 300 °C über der Schmelztemperatur des Flüssigmetalls und der Schlacke gehalten. Durch dieses relativ kompakte Bett aus Kokspartikeln in der zweiten Zone wird der Aufschmelzprozeß, jedenfalls der größeren Eisenschwammpartikel, aus dem Schlackenbad nach oben verlegt, denn die in der ersten Fließbettzone abgebremsten und erwärmten größeren Eisenschwammpartikel können nunmehr nicht unmittelbar bis zum Schlackenbad gelangen, sondern sie bleiben auf oder in den obersten Schichten der zweiten Zone liegen und werden im Bereich der ersten Einblaszone aufgeschmolzen.

Das aufgeschmolzene Material sickert durch die untere, zweite Zone und erreicht dabei eine Temperatur von etwa 1 400 bis 1 500 °C. In diesem Temperaturbereich entsteht bei der Reaktion von Kohlenstoff mit Sauerstoff über $CO_2$ nahezu ausschließlich Kohlenmonoxid ; entstandenes Roheisen kann in dieser reduzierenden Atmosphäre nicht reoxidiert werden. In der zweiten Zone sind überdies metallurgische Reaktionen, wie Aufkohlung, Silizium- und Mangan-Reduktion, möglich. Dies bezieht sich insbesondere auch auf die Entschwefelung und auf die Reduktion des FeO-Gehaltes der Schlacke. Die Qualität der Metallprodukte ist durch Einleiten von Kohlenstoffträgern und/oder Zuschlagstoffen in die zweite Zone beeinflußbar.

Da bei dem erfindungsgemäßen Verfahren die Einschmelzebene für größere Eisenschwammpartikel aus dem Schlackenbad in den oberen Bereich der zweiten Zone verlegt worden ist und in das Schlackenbad nur aufgeschmolzenes Material mit entsprechend hoher Temperatur gelangt, ist es selbst bei Einsatz von minderwertiger Kohle möglich, ausreichend hohe Temperaturen im Schlackenbad und in der Schmelze zu erzielen, sodaß auch nach Abstich des Roheisens oder des Stahlvormaterials dieses eine ausreichend hohe Temperatur aufweist, um die gewünschten metallurgischen Reaktionen danach auszuführen. Notwendige Voraussetzung ist, daß die größeren Eisenschwammteilchen, die oben auf der zweiten Zone liegen bleiben, hier tatsächlich aufgeschmolzen werden können, d. h., daß der ersten Einblasebene zwischen der ersten Fließbettzone und der zweiten Zone sauerstoffhaltiges Gas zugeführt und in diesem Bereich eine exotherme Reaktion erzielt wird. Würde, wie bei dem Verfahren nach der DE-C2-1 017 314, der ersten Einblaszone ein endotherm reagierendes Vergasungsmittel zugeführt werden, dann könnten hier die Eisenschwammpartikel nicht aufgeschmolzen werden, größere Partikel würden sich auf der zweiten Zone häufen und den Abbruch des Prozesses erzwingen.

Der Zustand eines gasdurchströmten Bettes aus körnigen Feststoffen hängt grundsätzlich von der Korngröße und der Dichte der Feststoffe sowie von der Geschwindigkeit des strömenden Gases ab. Der Druckverlust des Gases in Abhängigkeit von der Höhe des Bettes steigt mit wachsender Gasgeschwindigkeit an, bis der sogenannte « Lockerungspunkt » des Feststoffbettes erreicht ist, an dem das Bett in den Fließzustand übergeht (vgl. Ullmanns Encyclopädie der technischen Chemie, Band 3, Verlag Chemie, 4. Auflage, 1973, Seiten 434 bis 439).

Wird die zweite Zone aus einer grobstückigen Koksschicht aufgebaut, dann kann diese Zone mit

0 114 040

relativ hohen Geschwindigkeiten durchgast werden, ohne daß eine Lockerung dieser Schicht eintritt.

Wird die zweite Zone durch Kokspartikel mit etwa der gleichen Korngrößenverteilung wie in der ersten Fließbettzone gebildet, d. h. durch Partikel eines Durchmessers von 0,5 bis 10 mm, vorzugsweise 1 bis 3 mm, müssen die Gase in die zweite Zone mit entsprechend niedrigerer Geschwindigkeit als in die erste Fließbettzone eingeleitet werden.

Vorteilhaft beträgt die Höhe der zweiten Zone 1,0 bis 3,0 m, vorzugsweise etwa 2 m.

Die Energieeinbringung in die zweite Zone erfolgt durch Verbrennung der Kokspartikel mit dem zugeführten Sauerstoff. Zur weiteren Temperatureinstellung bzw. um die Abbrandgeschwindigkeit des Kokses in der zweiten Zone zu verringern, werden in diese zweckmäßig ein Teil der entstandenen Reduktionsgase, flüssige Kohlenwasserstoffe und/oder feinteilige Kohle zusätzlich als Kohlenstoffträger eingeführt.

Das sauerstoffhaltige Gas und gegebenenfalls die Kohlenstoffträger und/oder Zuschlagstoffe können an beliebiger Stelle in die zweite Zone eingeleitet werden. Vorzugsweise werden sie jedoch seitlich in den unteren Bereich dieser Zone eingeleitet.

Nach einer weiteren vorteilhaften Ausführungsform werden sauerstoffhaltiges Gas und/oder Kohlenstoffträger und/oder Zuschlagstoffe in verschiedenen Ebenen in die zweite Zone aus Kokspartikeln eingeleitet.

Zweckmäßig werden das sauerstoffhaltige Gas und/oder Kohlenstoffträger vorerhitzt in die zweite Zone aus Kokspartikeln eingeleitet.

Zur Temperaturregelung der zweiten Zone kann $CO_2$-haltiges Gas, z. B. Gichtgas aus einem in das Verfahren integrierten Reduktionsschacht, in die heiße zweite Zone zurückgeführt werden. Dabei wird in einer endothermen Reduktion $CO_2$ zu $CO$ umgesetzt. Dadurch entsteht wiederum wertvolles Reduktionsgas, das dem Prozeß zusätzlich zur Verfügung gestellt wird. Es ist auch denkbar, daß anstelle von Gichtgas Kohlenwasserstoffe in flüssigem oder gasförmigem Zustand eingesetzt werden.

Um eine gleichmäßige Durchgasung und möglichst starke Erhitzung der zweiten Zone zu erreichen, werden die Gase in der zweiten Einblasebene mit einer unterhalb der Lockerungsgeschwindigkeit für das Feststoffbett liegenden Geschwindigkeit eingeblasen.

Der Abstand der Düsenebenen vom Einschmelzvergaserboden in m kann nach folgenden Formeln berechnet werden.

$$h_1 = C_1 + \frac{P_V \cdot T_A}{C \cdot D_V^2} \tag{1}$$

$h_1$ = Höhe der unteren (zweiten) Einblasebene (m)

$C_1$ = Konstante : 0,20 bis 0,30 m (Sicherheitswert, um zu verhindern, daß flüssige Schlacke die Düsen zusetzt)

$C$ = Konstante : 2,98 t/m³ (unter der Annahme einer Schmelzendichte von 7,6 t/m³)

$P_V$ = Einschmelzleistung (t/h)

$T_A$ = Abstichintervall (h)

$D_V$ = Durchmesser des Einschmelzvergasers (m)

$$h_2 = h_1 + 0,5 \, C_2 \tag{2}$$

$h_2$ = Höhe der oberen (ersten) Einblasebene (m)

$C_2$ = Materialkonstante des Brennstoffes (m)

Die Höhe der unteren Einblasebene über dem Einschmelzvergaserboden ergibt sich aus der Abstichleistung und dem Querschnitt des Einschmelzvergaserfußes. Beispielsweise beträgt die Höhe der unteren Einblasebene bei einer Einschmelzleistung von 40 t/h, einem Abstichintervall von 2 h und einem lichten Durchmesser im Einschmelzvergaserfuß von 3 m 3,18 bis 3,28 m.

Der Wert für $C_2$ variiert von 1 m bis 5 m, je nach Qualität des eingesetzten Brennstoffes. Wird ein kleinstückiger Brennstoff mit hohem Heizwert und guter Reaktivität eingesetzt, so liegt der Wert für $C_2$ nahe 1 m, was einem Abstand der Einblasebenen zueinander von etwa 0,5 m entspricht. Wird grobstückiges Material mit niedrigem Heizwert und/oder niedriger Reaktivität vergast, so erhöht sich der Wert von $C_2$ bis 5 m und es ergibt sich damit ein Abstand der beiden Einblasebenen zueinander von etwa 2,5 m.

Gemäß einer vorteilhaften Weiterbildung der Erfindung werden die Gase in der zweiten Einblasebene mit sich periodisch ändernder Geschwindigkeit (pulsierend) eingeblasen. Auf diese Weise kann eine Aufwirbelung in dieser Zone sicher vermieden werden, eventuell im Koksfestbett auftretende Druckmaxima können abgebaut werden, d. h. örtliche Übermengen an sauerstoffhaltigem Gas bzw. Reduktionsgas verteilen sich besser im Festbett.

Vorzugsweise werden die Gase in der zweiten Einblasebene mit einer Periodendauer von 10 s bis 2 min pulsierend eingeblasen, wobei die Spitzenwerte der sich periodisch ändernden Gasgeschwindigkeit gegebenenfalls kurzzeitig über der der Lockerungsgeschwindigkeit für das Feststoffbett entsprechenden Leerrohrgeschwindigkeit liegen.

4

Sind mehrere Düsen zum Einleiten der Gase in die zweite Zone vorgesehen, können diese abwechselnd mit mehr oder weniger Gas beaufschlagt werden, wobei die Periodendauer — abhängend insbesondere vom Durchmesser und von der Höhe der zweiten Zone — gleichfalls zweckmäßig zwischen 10 s und 2 min eingestellt wird. Da der Druckverlust des Gases in einem Koksbett beim Überschreiten der Lockerungsgeschwindigkeit ein Maximum durchläuft, können beim beschriebenen pulsierenden Einleiten der Gase größere Gasmengen in die zweite Zone eingebracht werden (vgl. Ullmanns Encyklopädie der technischen Chemie, Band 3, Verlag Chemie, 4. Auflage, 1973, Seite 439). Die Höhe des an der Ausmündung der Gaszufuhreinrichtung einzustellenden Vordruckes ergibt sich im wesentlichen additiv aus dem Druckverlust in der ersten Koksfließbettzone und dem Druckverlust in der zweiten Zone.

Als Vorrichtung zur Durchführung des erfindungsgemäßen Verfahrens eignet sich ein Einschmelzvergaser aus einem feuerfest ausgekleideten Gefäß mit Öffnungen für die Zugabe von Kohle, eisenhaltigem Material sowie für den Austritt des erzeugten Reduktionsgases, ferner mit Öffnungen für den Abstich der Metallschmelze und der Schlacke sowie mit Rohren bzw. Düsen, die oberhalb des Schlackenspiegels in wenigstens zwei verschiedenen Höhen (Einblasebenen) in den Einschmelzvergaser münden. Ein solcher Einschmelzvergaser ist prinzipiell in der EP-B1-0 010 627 beschrieben. Die Rohre bzw. Düsen müssen selbstverständlich den einzublasenden Medien angepaßt sein. Die Mündungen der Düsen sollen 20 bis 30 cm über dem höchsten zu erwartenden Schlackenbadspiegel liegen, um zu verhindern, daß sich diese mit Schlacke zusetzen. Im Hinblick auf die sich ändernde Höhe des Schlackenspiegels sind bei dem Einschmelzvergaser die Mündungen wenigstens der unteren Rohre bzw. Düsen in der Höhe verstellbar, wobei dies bei schräg abwärts gerichteten Düsen durch eine Axialverschiebung erreicht werden kann oder bei vertikal schwenkbaren Düsen dadurch, daß die Schwenkachse im Abstand von der Düsenmündung liegt. Als schwenkbare Rohre bzw. Düsen eignen sich die in der DE-C2-30 34 520 beschriebenen Düsen.

Zweckmäßig sind wenigstens die unteren Rohre bzw. Düsen im Bereich der Mündung gekühlt.

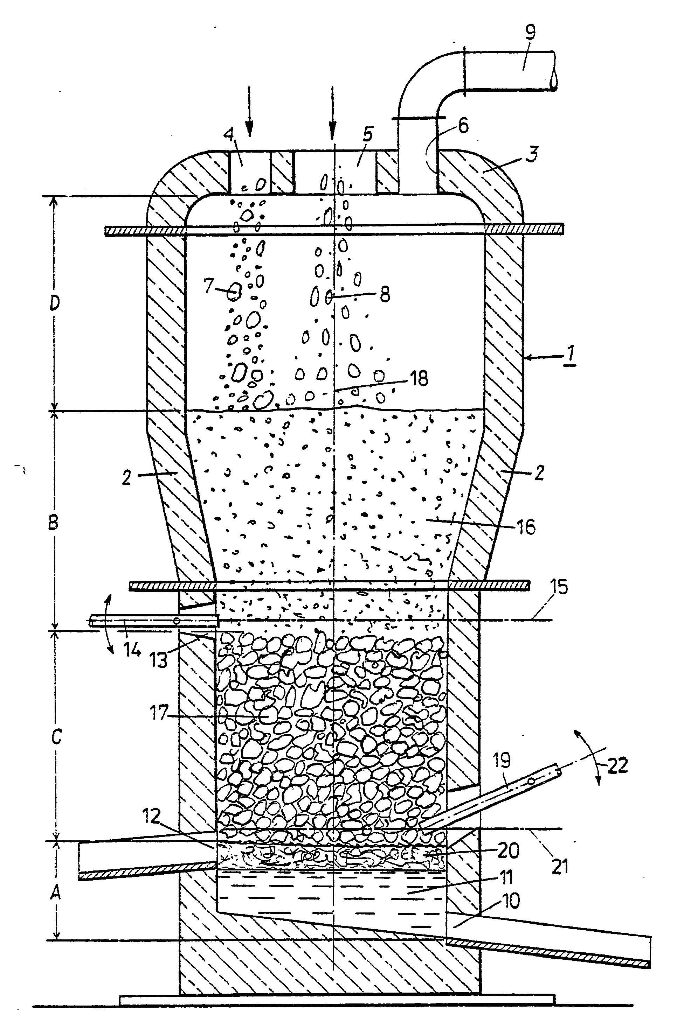

Die Erfindung wird anhand einer Zeichnung näher erläutert. Die Zeichnung stellt schematisch im Schnitt einen Einschmelzvergaser 1 dar, dessen Wände 2 an ihrer Innenseite feuerfest ausgekleidet sind. Die Haube 3 des Einschmelzvergasers 1 ist von drei Öffnungen 4, 5 und 6 durchsetzt. Die Öffnung 4 ist zum Chargieren von Kohle oder Koks 7 unterschiedlicher Körnung bzw. Stückgröße bestimmt. Durch die Öffnung 5 wird teilchenförmiges eisenhaltiges Material 8, vorzugsweise Eisenschwamm, mit einem wesentlichen Anteil einer Partikelgröße oberhalb 3 mm zugesetzt. Zweckmäßig ist es, den Eisenschwamm mit einer Temperatur von etwa 700 °C zuzuführen. Zur Ableitung des entstehenden Reduktionsgases ist eine in die Öffnung 6 eingesetzte Leitung 9 vorgesehen. Das abgeleitete Reduktionsgas wird hauptsächlich zum Vorreduzieren oder Reduzieren von oxidischem Eisenerz verwendet.

Der Einschmelzvergaser weist einen unteren Abschnitt A, einen mittleren Abschnitt B und zwischen diesen beiden Abschnitten einen Zwischenabschnitt C, ferner oberhalb des mittleren Abschnittes B einen oberen Abschnitt D auf, dessen Querschnitt erweitert ist und der als Beruhigungsraum dient.

Im Bodenbereich des unteren Abschnittes A des Einschmelzvergasers 1, welcher zum Auffangen geschmolzenen Metalles und flüssiger Schlacke dient, ist in der Wand 2 eine Abstichöffnung 10 für die Schmelze 11 vorgesehen. Etwas höher im unteren Abschnitt A befindet sich eine Öffnung 12 für den Schlackenabstich.

Im unteren Bereich des mittleren Abschnittes B des Einschmelzvergasers 1 ist durch eine Öffnung 13 in der Wand 2 ein Düsenrohr 14 geführt, durch welches sauerstoffhaltiges Trägergas und gegebenenfalls Kohlenstoffträger in einer ersten horizontalen Einblasebene 15 in den Einschmelzvergaser 1 geleitet werden.

Vorzugsweise ist eine Vielzahl von Öffnungen 13 mit Düsenrohren 14 in dieser Ebene des Einschmelzvergasers vorhanden. Im mittleren Abschnitt B wird eine erste Fließbettzone 16 aus Kokspartikeln mit starker Bewegung der Partikel gebildet.

Der Zwischenabschnitt C, der bei dem dargestellten Ausführungsbeispiel zylindrisch gestaltet ist, ist zur Aufnahme einer zweiten Zone 17 eines Fließbettes aus Kokspartikeln mit schwacher oder unmerklicher Bewegung der Partikel oder eines Festbettes aus Kokspartikeln vorgesehen.

Durch die Wand des Zwischenabschnittes C sind auf die zentrale Achse 18 des Einschmelzvergasers gerichtete Zufuhreinrichtungen, im vorliegenden Fall Düsenrohre 19, für sauerstoffhaltiges Gas und Kohlenstoffträger geführt, welche in die zweite Zone 17 aus Kokspartikeln ragen und deren Mündungen knapp oberhalb der Schlackenschicht 20 angeordnet sind. In der Zeichnung ist nur ein Düsenrohr 19 dargestellt. Je nach Größe des Einschmelzvergasers können 10 bis 40, vorzugsweise 20 bis 30, Düsenrohre 19, deren Mündungen im wesentlichen in einer zweiten horizontalen Einblasebene 21 liegen, vorgesehen sein. Die Düsenrohre 19 sind in Richtung des Doppelpfeils 22 vertikal schwenkbar angeordnet. Auch die Düsenrohre 14, durch welche das Trägergas bzw. Zusatzbrennstoff in die erste Fließbettzone 16 einströmen, sind bei der gezeigten Ausführungsform der Erfindung vertikal schwenkbar ausgeführt.

Das durch die Öffnung 5 eingebrachte eisenhaltige Material 8 gelangt zunächst, nachdem es den als Beruhigungsraum dienenden oberen Abschnitt D des Einschmelzvergasers durchfallen hat, in die erste Fließbettzone 16, in welcher es abgebremst und erhitzt wird. Kleinere Teilchen schmelzen auf, sickern durch die zweite Zone 17 aus Kokspartikeln und gelangen in den unteren Abschnitt A. Größere Teilchen bleiben zunächst auf der zweiten Zone 17 liegen oder werden in der obersten Schicht dieser Zone festgehalten, bis sie gleichfalls unter der Einwirkung der hohen Temperatur im Bereich der ersten Einblasebene 15 aufgeschmolzen sind. In der zweiten Zone wird die nach unten sickernde Metallschmelze überhitzt und kann gegebenenfalls durch Umsetzung mit feinteiligen Zuschlagstoffen, welche durch die Düsenrohre 19 eingebracht werden, behandelt werden. Die aus der Öffnung 10 abgestochene Metallschmelze 11 ist heiß genug, um weiteren metallurgischen Nachbehandlungen unterworfen werden zu können. Oberhalb der Schmelze 11 sammelt sich eine Schicht flüssiger Schlacke 20 an, welche über die Abstichöffnung 12 abgezogen wird.

Die Kohlepartikel müssen während des Betriebes des Einschmelzvergasers laufend durch die Öffnung 4 ergänzt werden, wobei größere Stücke, welche vorzugsweise zum Aufbau der zweiten Zone 17 eingesetzt werden, durch die erste Zone 16 fallen.

**Patentansprüche**

1. Verfahren zur Erzeugung von flüssigem Roheisen oder von Stahlvorprodukten und Reduktionsgas in einem Einschmelzvergaser, in dem durch Zugabe von Kohle und durch Einblasen von sauerstoffhaltigem Gas eine erste Fließbettzone aus Kokspartikeln mit starker Bewegung der Partikel oberhalb der Einblasebene (erste Einblasebene) gebildet wird und Eisenschwammpartikel und/oder vorreduzierte Eisenerzpartikel mit einem wesentlichen Anteil einer Partikelgröße oberhalb 3 mm der ersten Fließbettzone von oben zugegeben werden, dadurch gekennzeichnet, daß unterhalb der ersten Einblasebene (15) und oberhalb des Schlackenbadspiegels eine zweite Einblasebene (21) für sauerstoffhaltiges Gas liegt und hier die Gaszufuhr so geregelt wird, daß sich zwischen den beiden Einblasebenen (21, 15) eine zweite Zone (17) eines Fließbettes aus Kokspartikeln mit schwacher oder unmerklicher Bewegung der Partikel oder eines durchgasten Feststoffbettes aus Kokspartikeln ausbildet und die Temperatur in der zweiten Zone (17) oberhalb der Schmelztemperatur des eisenhaltigen Materials (8) gehalten wird.

2. Verfahren nach Anspruch 1, dadurch gekennzeichnet, daß die zweite Zone (17) im wesentlichen aus Kokspartikeln einer Korngröße von 2 mm bis 70 mm gebildet wird.

3. Verfahren nach Anspruch 2, dadurch gekennzeichnet, daß die zweite Zone (17) im wesentlichen aus Kokspartikeln einer Korngröße von 10 mm bis 30 mm gebildet wird.

4. Verfahren nach einem der Ansprüche 1 bis 3, dadurch gekennzeichnet, daß die Höhe der zweiten Zone (17) 1 m bis 3 m beträgt.

5. Verfahren nach Anspruch 4, dadurch gekennzeichnet, daß die Höhe der zweiten Zone etwa 2 m beträgt.

6. Verfahren nach einem der Ansprüche 1 bis 5, dadurch gekennzeichnet, daß die Gaszufuhr in der zweiten Einblasebene (21) so geregelt wird, daß sich eine unterhalb der Lockerungsgeschwindigkeit für ein Feststoffbett liegende Leerrohrgeschwindigkeit einstellt.

7. Verfahren nach einem der Ansprüche 1 bis 6, dadurch gekennzeichnet, daß die Gase in der zweiten Einblasebene (21) mit sich periodisch ändernder Geschwindigkeit (pulsierend) eingeblasen werden.

8. Verfahren nach Anspruch 7, dadurch gekennzeichnet, daß die Gase in der zweiten Einblasebene (21) mit einer Periodendauer von 10 s bis 2 min pulsierend eingeblasen werden.

9. Verfahren nach Anspruch 7 oder 8, dadurch gekennzeichnet, daß die Spitzenwerte der sich periodisch ändernden Geschwindigkeit kurzzeitig über der der Lockerungsgeschwindigkeit für das Feststoffbett entsprechenden Leerrohrgeschwindigkeit liegen.

10. Verfahren nach einem der Ansprüche 1 bis 9, dadurch gekennzeichnet, daß in die zweite Zone (17) aus Kokspartikeln Kohlenstoffträger in gasförmiger, flüssiger oder feinteiliger fester Form eingeblasen werden.

11. Verfahren nach einem der Ansprüche 1 bis 10, dadurch gekennzeichnet, daß in die zweite Zone (17) aus Kokspartikeln Zuschlagstoffe eingeleitet werden.

12. Verfahren nach Anspruch 10 oder 11, dadurch gekennzeichnet, daß sauerstoffhaltiges Gas und/oder Kohlenstoffträger und/oder Zuschlagstoffe seitlich in den unteren Bereich der zweiten Zone (17) aus Kokspartikeln eingeleitet werden.

13. Verfahren nach einem der Ansprüche 10 bis 12, dadurch gekennzeichnet, daß sauerstoffhaltiges Gas und/oder Kohlenstoffträger und/oder Zuschlagstoffe in verschiedenen Ebenen in die zweite Zone (17) aus Kokspartikeln eingeleitet werden.

14. Verfahren nach einem der Ansprüche 1 bis 13, dadurch gekennzeichnet, daß das sauerstoffhaltige Gas und/oder Kohlenstoffträger vorerhitzt in die zweite Zone (17) aus Kokspartikeln eingeleitet werden.

15. Verfahren nach einem der Ansprüche 1-14, dadurch gekennzeichnet, daß unterhalb der ersten Fließbettzone eine Festbettzone aus Kokspartikeln vorgesehen wird, welche sich aus dem Fließbett absetzen, in die gleichfalls sauerstoffhaltiges Gas und gegebenenfalls Kohlenstoffträger und/oder Zuschlagstoffe eingeleitet werden.

**Claims**

1. A method for producing molten pig iron or steel pre-products and reduction gas in a meltdown

# 0 114 040

gasifier, in which a first fluidized-bed zone of coke particles is formed by the addition of coal and by blowing in oxygen-containing gas, with a vigorous motion of the particles above the blow-in plane (first blow-in plane), iron sponge particles and/or pre-reduced iron ore particles having a substantial portion of a particle size of above 3 mm being supplied to the first fluidized-bed zone from above, characterised in that below the first blow-in plane (15) and above the slag bath level, a second blow-in plane (21) for oxygen-containing gas is provided, in which the gas supply is regulated such that a second zone (17) of a fluidized bed of coke particles with a weak or unnoticeable motion of the particles, or of a gas-passed solids bed of coke particles, forms between the two blow-in planes (21, 15), the temperature in the second zone (17) being maintained above the melting temperature of the ferrous material (8).

2. A method according to claim 1, characterised in that the second zone (17) substantially is formed by coke particles having a grain size of from 2 mm to 70 mm.

3. A method according to claim 2, characterised in that the second zone (17) substantially is formed by coke particles having a grain size of from 10 mm to 30 mm.

4. A method according to any one of claims 1 to 3, characterised in that the height of the second zone (17) is 1 m to 3 m.

5. A method according to claim 4, characterised in that the height of the second zone is about 2 m.

6. A method according to any one of claims 1 to 5, characterised in that the gas supply in the second blow-in plane (21) is regulated such that a clear tube velocity lying below the loosening velocity for a solids bed adjusts.

7. A method according to any one of claims 1 to 6, characterised in that the gases in the second blow-in plane (21) are blown in at a periodically changing velocity (in a pulsed mode).

8. A method according to claim 7, characterised in that the gases in the second blow-in plane (21) are blown in in a pulsed mode with a period lasting for 10 s to 2 min.

9. A method according to claim 7 or 8, characterised in that the peak values of the periodically changing velocity, for a short time, lie above the clear tube velocity corresponding to the loosening velocity of the solids bed.

10. A method according to any one of claims 1 to 9, characterised in that carbon carriers in gaseous, liquid or fine-particle solid form are blown into the second zone (17) of coke particles.

11. A method according to any one of claims 1 to 10, characterised in that fluxes are supplied into the second zone (17) of coke particles.

12. A method according to claim 10 or 11, characterised in that oxygen-containing gas and/or carbon carriers and/or fluxes are laterally introduced into the lower region of the second zone (17) of coke particles.

13. A method according to any one of claims 10 to 12, characterised in that oxygen-containing gas and/or carbon carriers and/or fluxes are introduced into the second zone (17) of coke particles at various levels.

14. A method according to any one of claims 1 to 13, characterised in that the oxygen-containing gas and/or carbon carriers are introduced into the second zone (17) of coke particles after pre-heating.

15. A method according to any one of claims 1 to 14, characterised in that, below the first fluidized-bed zone, a fixed-bed zone of coke particles that deposit from the fluidized bed is provided, into which oxygen-containing gas and optionally carbon carriers and/or fluxes are likewisely introduced.

**Revendications**

1. Procédé pour produire de la fonte brute liquide ou des produits de base de l'acier et du gaz réducteur dans un gazéificateur de fusion dans lequel, par addition de charbon et par insufflation de gaz contenant de l'oxygène on forme une première zone à lit fluidisé constituée de particules de coke à fort mouvement des particules au-dessus du plan d'insufflation (premier plan d'insufflation) et dans lequel on ajoute, par en haut, à la première zone à lit fluidisé, des particules d'éponge de fer et/ou des particules préréduites de minerai de fer contenant une proportion notable de particules d'une granulométrie supérieure à 3 mm, caractérisé en ce qu'en dessous du premier plan d'insufflation (15) et au-dessus du niveau du bain de laitier se trouve un deuxième plan d'insufflation (21) de gaz contenant de l'oxygène ; et en ce qu'on règle ici l'arrivée du gaz de façon qu'entre les deux plans d'insufflation (21, 15) se forme une seconde zone (17) d'un lit fluidisé constitué de particules de coke à faible ou négligeable mouvement des particules ou d'un lit solide, traversé par le gaz, constitué de particules de coke et de façon que la température dans la seconde zone (17) soit maintenue au-dessus de la température de fusion du produit contenant du fer (8).

2. Procédé selon la revendication 1, caractérisé en ce que la seconde zone (17) est essentiellement constituée de particules de coke d'une granulométrie allant de 2 mm à 70 mm.

3. Procédé selon la revendication 2, caractérisé en ce que la seconde zone (17) est essentiellement constituée de particules de coke d'une granulométrie allant de 10 mm à 30 mm.

4. Procédé selon l'une des revendications 1 à 3, caractérisé en ce que la hauteur de la seconde zone (17) va de 1 m à 3 m.

5. Procédé selon la revendication 4, caractérisé en ce que la hauteur de la seconde zone est d'environ 2 m.

7

6. Procédé selon l'une des revendications 1 à 5, caractérisé en ce que l'on règle l'arrivée du gaz dans le second plan d'insufflation (21) de façon à obtenir une vitesse en tube vide de valeur inférieure à la vitesse au point de transformation à l'état fluidisé pour un lit solide.

7. Procédé selon l'une des revendications 1 à 6, caractérisé en ce que l'on insuffle les gaz dans le second plan d'insufflation (21) à vitesse périodiquement changeante (par pulsation).

8. Procédé selon la revendication 7, caractérisé en ce que l'on insuffle les gaz dans le second plan d'insufflation (21) par pulsation d'une période de durée de 10 secondes à 2 minutes.

9. Procédé selon la revendication 7 ou la revendication 8, caractérisé en ce que les valeurs de pointe de la vitesse périodiquement changeante se situent brièvement au-dessus de la vitesse en tube vide correspondant à la vitesse au point de transformation à l'état fluidisé pour le lit solide.

10. Procédé selon l'une des revendications 1 à 9, caractérisé en ce que la deuxième zone (17) constituée de particules de coke, on insuffle un fluide support de carbone sous forme gazeuse, sous forme liquide ou sous forme solide en fine granulométrie.

11. Procédé selon l'une des revendications 1 à 10, caractérisé en ce que dans la seconde zone (17) constituée de particules de coke, on introduit des produits d'addition.

12. Procédé selon la revendication 10 ou la revendication 11, caractérisé en ce que l'on introduit du gaz contenant de l'oxygène et/ou du fluide support de carbone latéralement dans la partie inférieure de la seconde zone (17) constituée de particules de coke.

13. Procédé selon l'une des revendications 10 à 12, caractérisé en ce que l'on introduit du gaz contenant de l'oxygène et/ou du fluide support de carbone et/ou des produits d'addition dans différents plans de la seconde zone (17) constituée de particules de coke.

14. Procédé selon l'une des revendications 1 à 13, caractérisé en ce que c'est après préchauffage que l'on introduit dans la seconde zone (17) constituée de particules de coke le gaz contenant l'oxygène et/ou le fluide support du carbone.

15. Procédé selon l'une des revendications 1-14, caractérisé en ce qu'en dessous de la première zone à lit fluidisé est prévue une zone à lit solide qui est constituée de particules de code qui se déposent à partir du lit fluidisé et dans laquelle on introduit également du gaz contenant de l'oxygène et éventuellement un fluide support de carbone et/ou des produits d'addition.